# EUROPEAN PATENT SPECIFICATION

(11) **EP 1 563 500 B1**
(45) Date of publication and mention of the grant of the patent: **26.04.2017**
(21) Application number: 02808174.3
(22) Date of filing: 22.11.2002
(51) Int. Cl.: G11B 20/10, G11B 20/14

(54) **AN EFFICIENT ANALOG FRONT END FOR A READ/WRITE CHANNEL OF A HARD DISK DRIVE RUNNING FROM A HIGHLY REGULATED POWER SUPPLY**
EIN EFFIZIENTER ANALOGER FRONT-END FÜR EINEN LESE-/SCHREIBKANAL EINES FESTPLATTENLAUFWERKS, BETRIEBEN MIT EINER HOCHREGULIERTEN STROMVERSORGUNG
COMPOSANT FRONTAL ANALOGIQUE EFFICACE POUR UN CANAL DE LECTURE/ECRITURE D'UN LECTEUR DE DISQUE DUR EXECUTE A PARTIR D'UNE ALIMENTATION HAUTEMENT REGULEE

(43) Date of publication of application: 17.08.2005
(73) Proprietor: Marvell International, Ltd., HM12 Hamilton (BM)
(72) Inventor: CYRUSIAN, Sasan, Scotts Valley, CA 95066 (US); FRANCK, Stephen J., Felton, CA 95018 (US); ANNADORE, Sriharsha, Sunnyvale, CA 94085 (US); BACH, Elmar, Santa Cruz, CA 95060 (US); HART, Siegfried, Santa Clara, CA 95051 (US); BLON, Thomas, 86860 Jengen (DE); BLISS, William G., Thornton, CO 80241 (US); RAE, James Wilson, Rochester, MN 55902 (US); RUEGG, Michael, Santa Cruz, CA 95060 (US); HUEWELS, Ulrich, 82319 Starnberg (DE); MISTLBERGER, Fritz, 85368 Moosburg (DE)
(74) Representative: Grünecker Patent- und Rechtsanwälte PartG mbB
(86) International application number: PCT/EP2002/013172
(87) International publication number: WO 2004/049327

(56) References cited:
- WO-A-02/097799
- WO-A-02/097811
- WO-A-02/097968
- US-A1- 2002 154 430
- US-A1- 2002 175 723
- US-A1- 2002 176 184
- US-A1- 2002 176 186

## Description

### BACKGROUND

Computer hard disk drives, also known as fixed disk drives or hard drives, have become a de facto standard data storage component of modem computer systems and are making further inroads into modem consumer electronics as well. Their proliferation can be directly attributed to their low cost, high storage capacity and high reliability, in addition to wide availability, low power consumption, high data transfer speeds and decreasing physical size.

These disk drives typically consist of one or more rotating magnetic platters encased within an environmentally controlled housing that further includes all of the electronics and mechanics to read and write data and interface with other devices. Read/write heads are positioned above each of the platters, and typically on each face, to record and read data. The electronics of a hard disk drive are coupled with these read/write heads and include numerous components to control the position of the heads and generate or sense the electromagnetic fields representing data. These components receive data from a host device, such as a personal computer, and translate that data into magnetic encodings written onto the disk platters by the heads. Further, when a host device requests data from the drive, the electronics locate the desired data, sense the magnetic encodings which represent that data and translate those encodings back into the binary digital information which the host device can understand. Further, error detection and correction algorithms are applied to ensure accurate storage and retrieval of data.

One area in which significant advancements have been made has been in the area of read/write head technology and the methods of interpreting the magnetic fluctuations sensed by these heads. The read/write head, of which a typical hard disk has several, is the interface between magnetic platters and the disk drive electronics. The read/write head actually reads and writes the magnetically encoded data as areas of magnetic flux on the platters. Data, consisting of binary 1's and 0's, are encoded by sequences of the presence or absence of flux reversals recorded or detected by the read/write head. A flux reversal is a change in the magnetic flux in two contiguous areas of the disk platter. Traditional hard drives read data off the platters by detecting the voltage peak imparted in the read/write head when a flux reversal passes underneath the read/write head as the platters rotate. This is known as "peak detection." However, increasing storage densities require reduced peak amplitudes and better signal discrimination and higher platter rotational speeds are pushing the peaks closer together thus making peak detection more difficult to accomplish.

Magneto-resistive ("MR") read/write heads have been developed with increased sensitivity to sense smaller amplitude magnetic signals and with increased signal discrimination to address some of the problems with increasing storage densities. In addition, another technology, known as Partial Response Maximum Likelihood ("PRML"), has been developed to further address the problems with peak detection as densities and rotational speeds increase. Borrowed from communications technology, PRML is an algorithm implemented in the disk drive electronics to interpret the magnetic signals sensed by the read/write heads. PRML-based disk drives read the analog waveforms generated by the magnetic flux reversals stored on the disk. However, instead of looking for peak values to indicate flux reversals, PRML-based drives digitally sample this analog waveform (the "Partial Response") and use advanced signal processing technologies to determine the bit pattern represented by that wave form (the "Maximum Likelihood"). This technology, in conjunction magneto-resistive ("MR") heads, have permitted manufacturers to further increase data storage densities. PRML technology further tolerates more noise in the sensed magnetic signals permitting the use of lower quality platters and read/write heads which increases manufacturing yields and lowers costs.

The read/write heads of the hard disk drive are coupled with a device called a read/write channel. Herein, the phrase "coupled with" is defined to mean directly connected to or indirectly connected with through one or more intermediate components. Such intermediate components may include both hardware and software based components. The read/write channel converts binary/digital data from the host device into the electrical impulses which drive the read/write head to magnetically record the data to the disk drive platters. Further, the read/write channel receives the analog waveform magnetically sensed by the read/write heads and converts that waveform back into the binary/digital data stored on the drive.

With many different drives available from multiple manufacturers, hard disk drives are typically differentiated by factors such as cost/megabyte of storage, data transfer rate, power requirements and form factor (physical dimensions) with the bulk of competition based on cost. With most competition between hard disk drive manufacturers coming in the area of cost, there is a need for enhanced hard disk drive components which prove cost effective in increasing supplies and driving down manufacturing costs all while increasing storage capacity, operating speed, reliability and power efficiency.

One area in which power efficiency can be increased is with the read/write channel of the hard drive. The read/write channel of the hard drive typically includes an analog portion, which is used to convert digital signals received from a controller to analog signals which then get sent to the read/write heads. The analog portion may also be used to receive analog signals from the read/write heads and convert them into digital signals.

Typically, the analog portion of the read/write channel 108 is manufactured using one of two methods. The first method is to use only high voltage transistors which all operate within the same voltage range. However, high voltage transistors require a lot of power, are relatively slow, and do not scale so well with a CMOS manufacturing process. The second method is to use both high voltage transistors and low voltage transistors and use a power supply voltage, which is substantially higher than the maximum rating for the low voltage transistors. Low voltage transistors operate at a higher speed, occupy less silicon area, and consume less power than high voltage transistors. Typically, low voltage transistors are used in a core area of a circuit and high voltage transistors are used in an I/O area of the circuit. However, since the high voltage transistors operate at a higher voltage range than the low voltage transistors, verification and simulations must be performed on the analog portion to insure that the low voltage transistors never receive more voltage than is required for them to operate. For example, the analog portion may include high voltage transistors that operate at a voltage range of between 2.16 volts and 2.64 volts (2.4 volts +/- 10%), and low voltage transistors that operate at a lower voltage range, such as between 1.62 volts and 1.98 volts (1.8 volts +/- 10%). In this example, since the analog portion is typically supplied a voltage that is within a single range, such as a voltage of 2.4 volts +/- 10%, verification and simulations must be performed on the analog portion to insure that the low voltage transistors never receive more voltage than is required for them to operate. Moreover, additional circuitry is placed inside the analog portion to further insure that the low voltage transistors never receive more voltage than is required for them to operate. The additional circuitry, and the verification and the simulations that must be performed on the analog portion, in turn, increase the time required to design the read/write channel.

### SUMMARY

The above mentioned problems are solved by the read/write channel claimed in claim 1 and by the method for operating a read/write channel claimed in claim 22.

Advantageous further embodiments are claimed in the subclaims.

### BRIEF DESCRIPTION OF THE DRAWINGS

Figure 1A depicts a block diagram of an exemplary hard disk drive coupled with a host device.
Figure 1B depicts a block diagram of a read/write channel for use with the disk drive of Figure 1A.
Figure 2 depicts a block diagram of a portion of a read path of a read/write channel, according to one preferred embodiment.
Figure 3 depicts a block diagram of a portion of a read path of a read/write channel, according to one preferred embodiment.

### DETAILED DESCRIPTION OF THE PRESENTLY PREFERRED EMBODIMENTS

The embodiments described herein relate to a PRML-based read/write channel device for hard disk drive controllers. The read/write channel is a device coupled with the read/write heads of the hard disk drive. Herein, the phrase "coupled with" is defined to mean directly connected to or indirectly connected with through one or more intermediate components. Such intermediate components may include both hardware and software based components. The read/write channel converts binary/digital data from the host device into the electrical impulses which drive the read/write head to magnetically record the data to the disk drive platters. Further, the read/write channel receives the analog waveform magnetically sensed by the read/write heads and converts that waveform back into the binary/digital data stored on the drive.

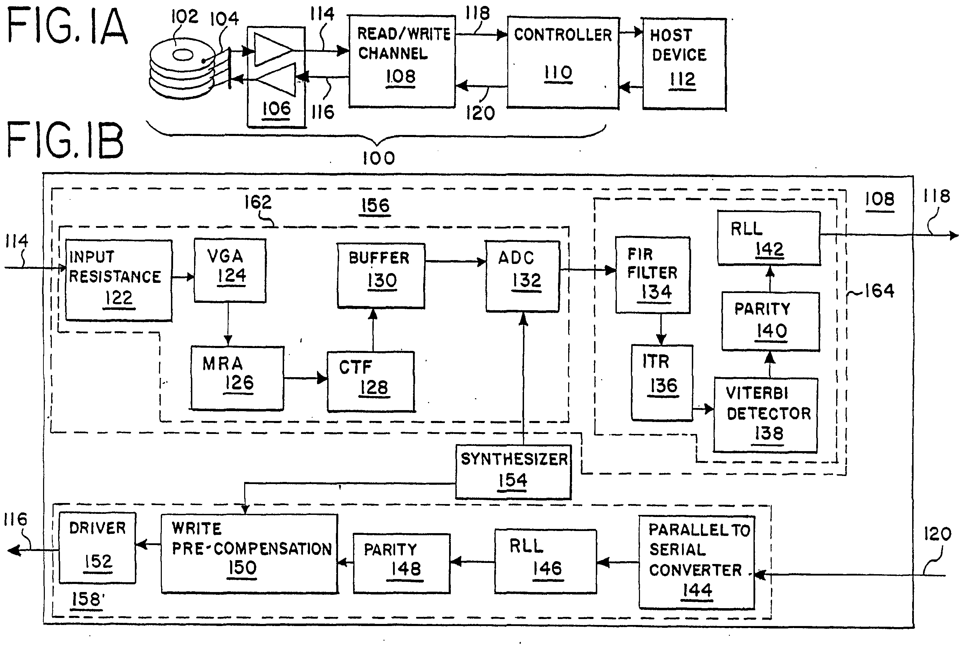

Referring to Figure 1A, there is shown a block diagram of an exemplary hard disk drive 100 coupled with a host device 112. For clarity, some components, such as the servo/actuator motor control, are not shown. The drive 100 includes the magnetic platters and spindle motor 102, the read/write heads and actuator assembly 104, pre-amplifiers 106, a read/write channel 108 and a controller 110. The pre-amplifiers 106 are coupled with the read/write channel 108 via interfaces 114, 116. The controller 110 interfaces with the read/write channel 108 via interfaces 118, 120.

For reads from the hard disk 100, the host device 112 provides a location identifier which identifies the location of the data on the disk drive, e.g. a cylinder and sector address. The controller 110 receives this address and determines the physical location of the data on the platters 102. The controller 110 then moves the read/write heads into the proper position for the data to spin underneath the read/write heads 104. As the data spins underneath the read/write head 104, the read/write head 104 senses the presence or absence of flux reversals, generating a stream of analog signal data. This data is passed to the pre-amplifiers 106 which amplify the signal and pass it to the read/write channel 108 via the interface 114. As will be discussed below, the read/write channel receives the amplified analog waveform from the pre-amplifiers 106 and decodes this waveform into the digital binary data that it represents. This digital binary data is then passed to the controller 110 via the interface 118. The controller 110 interfaces the hard drive 100 with the host device 112 and may contain additional functionality, such as caching or error detection/correction functionality, intended to increase the operating speed and/or reliability of the hard drive 100.

For write operations, the host device 112 provides the controller 110 with the binary digital data to be written and the location, e.g. cylinder and sector address, of where to write it. The controller 110 moves the read/write heads 104 to the proper location and sends the binary digital data to be written to the read/write channel 108 via interface 120. The read/write channel 108 receives the binary digital data, encodes it and generates analog signals which are used to drive the read/write head 104 to impart the proper magnetic flux reversals onto the magnetic platters 102 representing the binary digital data. The generated signals are passed to the pre-amplifiers 106 via interface 116 which drive the read/write heads 104.

Referring to Figure 1B, there is shown an exemplary read/write channel 108 supporting Partial Response Maximum Likelihood ("PRML") encoding technology for use with the hard disk drive 100 of Figure 1A. For clarity, some components have been omitted. The read/write channel 108 is implemented as an integrated circuit using a complementary metal oxide semiconductor ("CMOS") process at 0.18 micron. It will be appreciated that CMOS processes include processes which use metal gates as well as polysilicon gates. It will further be appreciated that other process technologies and feature sizes may used and that the circuitry disclosed herein may be further integrated with other circuitry comprising the hard disk electronics such as the hard disk controller logic. As was described, the read/write channel 108 converts between binary digital information and the analog signals representing the magnetic flux on the platters 102. The read/write channel 108 is divided into two main sections, the read path 156 and the write path 158.

The write path 158 includes a parallel-to-serial converter 144, a run-length-limited ("RLL") encoder 146, a parity encoder 148, a write pre-compensation circuit 150 and a driver circuit 152. The parallel-to-serial converter 144 receives data from the host device 112 via interface 120 eight bits at a time. The converter 144 serializes the input data and sends the serial bit stream to the RLL encoder 146. The RLL encoder 146 encodes the serial bit stream into symbolic binary sequences according to a known run-length limited algorithm for recording on the platters 102. The exemplary RLL encoder uses a 32/34 bit symbol code to ensure that flux reversals are properly spaced and that long runs of data without flux reversals are not recorded. The RLL encoded data is then passed to the parity encoder 148 which adds a parity bit to the data. In the exemplary parity encoder 148, odd parity is used to ensure that long run's of 0's and 1's are not recorded due to the magnetic properties of such recorded data. The parity encoded data is subsequently treated as an analog signal rather than a digital signal. The analog signal is passed to a write pre-compensation circuit 150 which dynamically adjusts the pulse widths of the bit stream to account for magnetic distortions in the recording process. The adjusted analog signal is passed to a driver circuit 152 which drives the signal to the pre-amplifiers 106 via interface 116 to drive the read/write heads 104 and record the data. The exemplary driver circuit 152 includes a pseudo emitter coupled logic ("PECL") driver circuit which generates a differential output to the pre-amplifiers 106.

The read path 156 of the read/write channel 108 includes an analog portion 162 and a digital portion 164, as illustrated in FIG. 1B. The analog portion 162 of the read path 156 is the portion of the read path 156 in which the signal passing through it is primarily analog. The analog portion 162 includes an attenuation circuit/input resistance 122, a variable gain amplifier ("VGA") 124, a magneto-resistive asymmetry linearizer ("MRA") 126, a continuous time filter ("CTF") 128, a buffer 130, and an analog to digital converter ("ADC") 132. The digital portion 164 of the read path 156 is the portion of the read path 156 in which the signal passing through it is primarily digital. The digital portion 164 includes a finite impulse response ("FIR") filter 134, an interpolated timing recovery ("ITR") circuit 136, a Viterbi algorithm detector 138, a parity decoder 140 and a run-length-limited ("RLL") decoder 142.

The amplified magnetic signals sensed from the platters 102 by the read/write head 104 are received by the read/write channel 108 via interface 114. The analog signal waveform representing the sensed magnetic signals is first passed through an input resistance 122 which is a switching circuit to attenuate the signal and account for any input resistance. The attenuated signal is then passed to a VGA 124 which amplifies the signal. In one embodiment, the VGA 124 uses (1+X) and (1-X) resistor DACs in gain cells within the VGA 124 to achieve equal gain step size in the logarithmic domain, an example of which is described in greater detail in U.S. Patent Application Serial No. US 2001 0866147, filed on May 25, 2001, assigned attorney docket no. 01 P 09222 US, and titled "Programmable Logarithmic Gain Adjustment for Open-Loop Amplifiers". In one embodiment, the VGA 124 uses current feedback in the gain cells to achieve equal gain step size in the logarithmic domain, an example of which is described in greater detail in U.S. Patent Application Serial No. US 2001 0865744, filed on May 25, 2001, assigned attorney docket no. 01 P 09234 US, and titled "High-Bandwidth Low-Voltage Gain-Cell And Voltage Follower Having An Enhanced Transconductance". Preferably, the VGA 124 includes auto zero capacitors that are not in the signal path, an example of which is described in greater detail in U.S. Patent Application Serial No. US 2001 0865389, filed on May 25, 2001, assigned attorney docket no. 01 P 09221 US, and titled "Active Auto Zero Circuit For Time Continuous Open Loop Amplifiers.

Upon passing through VGA 124, the amplified signal is then passed to the MRA 126 which adjusts the signal for any distortion created by the recording process. Essentially, the MRA 126 performs the opposite function of the write-pre-compensation circuit 150 in the write path 158. In one preferred embodiment, the output from the MRA pass to a stemming node 155. The stemming node 155 is connected with an offset correction DAC (ODAC) 160. The ODAC 160 introduces an analog offset, which is proportional to its digital input. Its digital input is controlled by a DC-restore-loop. The DC-restore-loop decides based on the output from the ADC 132 if the offset value of the ODAC 160 has to be increased or reduced. The goal of the DC-restore-loop is to remove any offset in the analog signal path. The analog signal path starts with the signal inputs of the read write channel into the VGA 124 and ends at the ADC 132. The DC-restore-loop does this by adding an offset to the analog signal at the output of the MRA 126. This offset has ideally the same absolute value as the effective offset in the analog signal path with an opposite sign. By doing so the DC-restore-loop cancels the offset of the analog signal path.

The signal is next passed through the CTF 128, which is essentially a low pass filter that filters out noise and pre-equalizes the signal by boosting some part of the signal in a pass-band. Preferably, the CTF 128 includes switching Gm cells, an example of which is described in greater detail in U.S. Patent Application Serial No. US 2001 0865863, filed on May 25,2001, assigned attorney docket no. 01 P 09240 US, and titled "Efficient Low Voltage Switchable Gm Cell In CMOS Technique For Filter and Gain Amplifier Applications," and in U.S. Patent Application Serial No. US 2001 0865649, filed on May 25, 2001, assigned attorney docket no. 01 P 09245 US, and titled "Method and Apparatus for Calibrating a Gm Cell Utilizing a Replica Gm Cell". In one embodiment, the CTF 128 includes a separate read filter circuit and a separate servo filter circuit, an example of which is described in greater detail in U.S. Patent Application Serial No. US 2001 0865861, filed on May 25, 2001, assigned attorney docket no. 01 P 09246 US, and titled "Method and Apparatus For Operating a Continuous Time Filter of a Read/Write Channel For a Hard Disk Drive". The filtered signal is then passed to the ADC 132 via the buffer 130 which samples the analog signal and converts it to a digital form. Preferably, the ADC 132 includes pre-amplifiers 106 with local common mode feedback in analog latches of the ADC 132, an example of which is described in greater detail in U.S. Patent Application Serial No. US 2001 0865856, filed on May 25,2001, assigned attorney docket no. 01 P 09248 US, and titled "Ultra High Speed Clocked Analog Latch," and in U.S. Patent Application Serial No. US 2001 0865791, filed on May 25, 2001, assigned attorney docket no. 01 P 09247 US, and titled "Ultra High Speed Clocked Limiting Preamplifier".

Upon passing through the ADC 132, the digital signal is then passed to a FIR filter 134 and then to a timing recovery circuit (ITR) 136. The ITR 136 is connected (not shown in the figure) to the FIR filter 134, the MRA 126 and the VGA 124 in a feedback orientation to adjust these circuits according to the signals received to provide timing compensation. The exemplary FIR filter 134 is a 10 tap FIR filter. The digital signal is then passed to the Viterbi algorithm detector 138 which determines the binary bit pattern represented by the digital signal using digital signal processing techniques. The exemplary Viterbi algorithm detector 138 uses a 32 state Viterbi processor. The binary data represented by the digital signal is then passed to the parity decoder 140 which removes the parity bit and then to the RLL decoder 142 which decodes the binary RLL encoding symbols back into the actual binary data that they represents This data is then passed to the controller 110 via the interface 118.

The read/write channel 108 further includes a clock synthesizer 154. The clock synthesizer 154 generates the clock signals required for operating the read/write channel 108. The exemplary clock synthesizer 154 includes a phased locked loop ("PLL") with a voltage controlled oscillator and various clock dividers to generate the necessary frequencies.

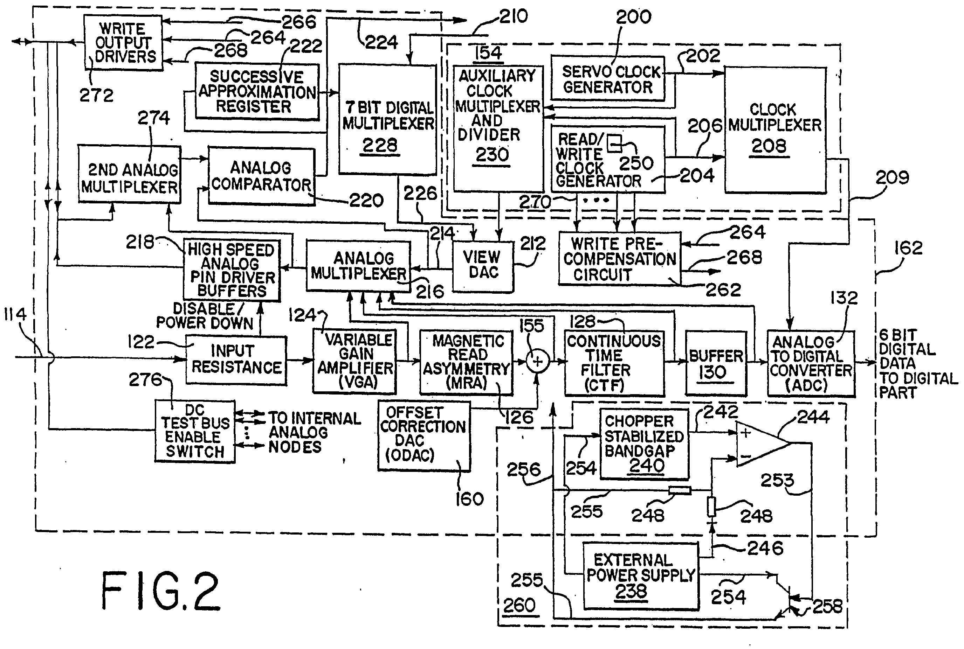

In one preferred embodiment, the clock synthesizer 154 includes a servo clock generator 200, a read/write clock generator 204, a clock multiplexer 208 and an auxiliary clock multiplexer and divider 230, as illustrated in FIG. 2. The servo clock generator 200 generates a servo clock signal 202 and the read/write clock generator 204 generates a read/write clock signal 206. The servo clock signal 202 and read/write clock signal 206 then go to a clock multiplexer 208 and an auxiliary clock multiplexer and divider 230. The clock multiplexer 208 allows either the servo clock signal 202 or the read/write clock signal 206 to pass through and go to the ADC 132. The auxiliary clock multiplexer and divider 230 allows either the servo clock signal 202 or the read/write clock signal 206 to pass through and go to the view DAC 212, as described below. The auxiliary clock multiplexer and divider 230 allows the view DAC 212 and the ADC 132 to run at the same time using different clock signals, an example of which is described in greater detail in U.S. Patent Application Serial No. US 2001 0865757, filed on May 25, 2001, assigned attorney docket no. 01 P 09220 US, and titled "Method and System For Utilizing a View DAC To Calibrate a Continuous Time Filter".

In one preferred embodiment, the read/write clock generator 204, also referred to as "read/write clock generation," uses no divider at reference frequency inputs of phase locked loops for generating the read clock signal 206, an example of which is described in greater detail in U.S. Patent Application Serial No. 09/676,277, filed September 28,2000, assigned attorney docket no. 00 P 7955 US, and titled "High Resolution, Low Jitter Frequency Synthesizer". In one preferred embodiment, the servo clock generator 200, also referred to as "servo clock generation," uses no divider at reference frequency inputs of phase locked loops for generating the servo clock signal 202, an example of which is described in greater detail in U.S. Patent Application Serial No. 09/676,277, filed September 28, 2000, assigned attorney docket no. 00 P 7955 US, and titled "High Resolution, Low Jitter Frequency Synthesizer".

In one preferred embodiment, the read/write clock generator 204 includes read/write phased locked loops having a feedback path. The read/write clock generator 204 uses a fractional divider in the feedback path of the read/write phased locked loops to achieve low frequency programming step sizes, an example of which is described in greater detail in U.S. Patent Application Serial No. 09/676,277, filed September 28, 2000, assigned attorney docket no. 00 P 7955 US, and titled "High Resolution, Low Jitter Frequency Synthesizer".

In one embodiment, the read/write clock generator 204 uses a low voltage charge pump, an example of which is described in greater detail in U.S. Patent Application Serial No. US 2001 0865610, filed on May 25, 2001, assigned attorney docket no. 01 P 09228, and titled "Low Voltage Charge Pump for Synthesizer/PLL".

In one embodiment, the read/write clock generator 204 uses an offset canceled charge-pump-based-phase-frequency detector, an example of which is described in greater detail in U.S. Patent Application Serial No. US 2001 0865406, filed on May 25,2001, assigned attorney docket no. 01 P 09233 US, and titled "Offset Calibration of Charge Pump Based Phase Detector for Synthesizer/PLL".

In one embodiment, the read/write clock generator 204 includes a Voltage Controlled Oscillator (VCO) 250 that is used for read/write clock generation. Preferably, the read/write clock generator 204 uses a delay unit with four transistors as a delay unit for the VCO 250, an example of which is described in greater detail in U.S. Patent Application Serial No. US 2001 0865269, filed on May 25, 2001, assigned attorney docket no. 01 P 09241 US, and titled "Differential CMOS Controlled Delay Unit". In one embodiment, the read/write clock generator 204 uses a delay unit to build a VCO 250 with only two delay stages, an example of which is described in greater detail in U.S. Patent Application Serial No. US 2001 0866269, filed on May 25,2001, assigned attorney docket no. 01 P 09241 US, and titled "Differential CMOS Controlled Delay Unit". In one embodiment, the read/write clock generator 204 uses a fully functional VCO 250 which has only one port for receiving both the power supply voltage and the control input signal to the VCO 250, an example of which is described in greater detail in U.S. Patent Application Serial No. US 2001 0866269, filed on May 25,2001, assigned attorney docket no. 01 P 09241 US, and titled "Differential CMOS Controlled Delay Unit". In one embodiment, the read/write clock generator 204 uses a VCO buffer that includes only one source follower and a current feedback loop, an example of which is described in greater detail in U.S. Patent Application Serial No. US 2001 0866178, filed on May 25,2001, assigned attorney docket no. 01 P 09239 US, and titled "Efficient Current Feedback Buffer".

In one embodiment, the read/write clock generator 204 includes a multiphase multiplexer that only has one or two NMOS transistors in each signal path of each phase and a pull up PMOS transistor operating as a pull up resistor, an example of which is described in greater detail in U.S. Patent Application Serial No. US 2001 0866264, filed on May 25, 2001, assigned attorney docket no. 01 P 09237 US, and titled "High-Speed Multiplexer".

In one embodiment, the analog portion 162 of the read path 156 includes a write pre-compensation circuit 262, which dynamically adjusts the pulse widths of the bit stream to account for magnetic distortions in the recording process, as illustrated in Figure 2. The synthesizer 154, and more specifically, the read/write clock generator 204 is connected with the write pre-compensation circuit 262. Additionally, the write pre-compensation circuit 262 receives write data 264 from the digital portion 164 of the read path 156 of the read/write channel 108. The write pre-compensation circuit 262 outputs write data with pre-compensation 268, which is received by write output drivers 272.

In one embodiment, the read/write clock generator 204 generates a multiphase output signal 270 using the VCO 250. The multiphase output signal 270 preferably includes at least four signals of varying phase, as illustrated in Figure 2. The multiphase output signal 270 is then passed to and used by the write pre-compensation circuit 262. In one embodiment, the write pre-compensation circuit 262 interpolates one or two times between difference phases of the VCO 250, an example of which is described in greater detail in U.S. Patent Application Serial No. US 2001 0865786, filed on May 25, 2001, assigned attorney docket no. 01 P 09230 US, and titled "Method and System for Managing a Pulse Width of a Signal Pulse". In one embodiment, the write pre-compensation circuit 262 uses a write compensation technique that has a digital zero phase restart, an example of which is described in greater detail in U.S. Patent Application Serial No. US 2001 0865787, filed on May 25, 2001, assigned attorney docket no. 01 P 09227 US, and titled "High Speed Digital Zero Phase Restart for a Multiphase Clock".

In one preferred embodiment, the analog portion 162 of the read path 156 further includes a 7 bit digital multiplexer 228, a view DAC 212, an analog multiplexer 216, high speed analog pin driver buffers 218, an analog comparator 220, and a successive approximation register 222, as illustrated in Figure 2. The 7 bit digital multiplexer 228 receives 7 bit view DAC data from the digital portion of the read/write channel 108 and receives a 7 bit auxiliary ADC output signal 224 from the successive approximation register 222, and decides which signal should pass to the view DAC 212. The view DAC 212 received the signal from the 7 bit digital multiplexer 228 and an additional clock signal from the auxiliary clock multiplexer and divider 230 and generates a view DAC output signal 214. The view DAC output signal 214 then passes to the analog comparator 220 and the analog multiplexer 216. In addition to receiving the view DAC output signal 214, the analog multiplexer 216 receives signals from the outputs of the VGA 124, the MRA 126, the CTF 128, and the buffer 130. Upon receiving all these signals, the analog multiplexer 216 then decides which signal to output, and outputs one of these signals to the high speed analog pin driver buffers 218. The high speed analog pin driver buffers 218 also receive a disable/power down signal. Using the analog multiplexer 216 and the high speed analog pin driver buffers 218, the read/write channel is able to multiplex the view DAC output 214 and an AC test bus output to the same pins, an example of which is described in greater detail in U.S. Patent Application Serial No. US 2001 0865611, filed on May 25, 2001, assigned attorney docket no. 01 P 09250 US, and titled "InpudOutput Multiplex System for a Read/Write Channel in a Disk Drive".

The analog comparator 220 receives the view DAC output signal 214 and compares it with the output from the high speed analog pin driver buffers 218 and generates an output signal that is passed to the successive approximation register 222. The successive approximation register 222, together with the view DAC 212 and the analog comparator 220, forms an auxiliary analog to digital converter (ADC). In particular, the successive approximation register 222 decides, based on the output of the analog comparator 220, the voltage that should be generated in the next clock cycle by the view DAC 212 for purposes of comparison with the analog voltage being input to the analog comparator 220. At the end of a conversion cycle, which is at least 6 clock cycles, the successive approximation register 222 contains the output of the analog to digital converter 132. The successive approximation register 222 then generates the 7 bit auxiliary ADC output signal 224 that is passed to the digital portion 164 and to the 7 bit digital multiplexer 228, as illustrated in Figure 2.

In one embodiment, the analog portion 162 of the read path 156 further includes a second analog multiplexer 274, write output drivers 272, and a DC test bus enable switch 276, as illustrated in Figure 2. The second analog multiplexer 274 receives the signal output from the high speed analog pin driver buffers 218 and the signal from the analog multiplexer 216 and decides which signal should pass to the analog comparator 220. The output of the high speed analog pin driver buffers 218 is also connected with the output of the write output drivers 272, as illustrated in Figure 2. The write output drivers 272 receive the write data with pre-compensation 268 from the write pre-compensation circuit, the write data 264 from the digital portion, and a disable/power down write driver signal 266. The output of the write output drivers 272 is connected with the output of the DC test bus enable switch 276. The DC test bus enable switch 276 is in communication with internal analog nodes, as illustrated in Figure 2.

Using the above described circuitry, the read/write channel 108 is able to multiplex write data outputs, a DC test bus input, and a DC test bus output to the same pins, an example of which is described in greater detail in U.S. Patent Application Serial No. US 2001 0865611, filed on May 25, 2001, assigned attorney docket no. 01 P 09250 US, and titled "Input/Output Multiplex System for a Read/Write Channel in a Disk Drive". Additionally, using the above described circuitry, the read/write channel 108 is able to reuse the view DAC 212 to build an auxiliary analog to digital converter, an example of which is described in greater detail in U.S. Patent Application Serial No. US 2001 0865651, on May 25, 2001, assigned attorney docket no. 01 P 09249 US, and titled "Diagnostic System for a Read/Write Channel in a Disk Driver".

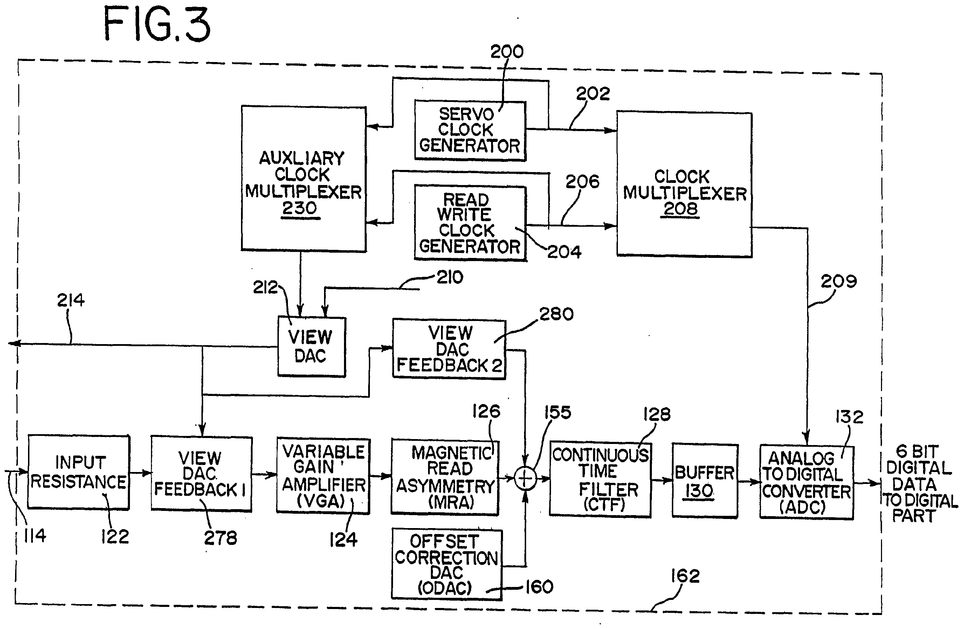

In one embodiment, the analog portion 162 of the read path 156 further includes a first view DAC feedback circuit 278 and a second view DAC feedback circuit 280 which allows the view DAC output signal 214 to enter the input of the VGA 124 or the input of the CTF 128, as illustrated in Figure 3, an example of which is described in greater detail in U.S. Patent Application Serial No. US 2001 0865757, filed on May 25,2001, assigned attorney docket no. 01 P 09220 US, and titled "Method and System For Utilizing a View DAC To Calibrate a Continuous Time Filter".

In one embodiment, the read/write channel 108, and in particular, the analog portion 162 and the clock synthesizer 154, are supplied power from a highly regulated power supply 260, as illustrated in Figure 2. The highly regulated power supply 260 supplies power having a narrow voltage range to the read/write channel 108. As used herein a narrow voltage range is a voltage range that is within +/- 7% of the nominal voltage, and more preferably, within +/- 3% of the nominal voltage. Highly regulated power supply 260 includes a chopper stabilized bandgap 240, an integrated voltage regulator 244, a negative power supply voltage 246, resistive voltage dividers 248, an pass transistor 258, and an external power supply 238. Preferably, the chopper stabilized bandgap 240, the integrated voltage regulator 244, the negative power supply voltage 246, and the resistive voltage dividers 248 are located within the read/write channel 108 while the pass transistor 258 and the external power supply 238 are not located within the read/write channel 108, as illustrated in Figure 2.

The external power supply 238 generates a negative high power supply voltage 246 and a positive high power supply voltage 254. In one embodiment, the negative high power supply voltage 246 and the positive high power supply voltage 254 are about 2.4 volts +/- 10%. The positive high power supply voltage 254 is supplied to the chopper stabilized bandgap 240 and the negative high power supply voltage 246 passes through a resistive voltage divider 248 and is then supplied to a negative input of the integrated voltage regulator 244, as illustrated in Figure 2. The chopper stabilized bandgap 240 generates a reference voltage 242 from the positive high power supply voltage 254. Preferably, the reference voltage 242 has a high absolute accuracy and a low temperature coefficient, so that even if the temperature of the surrounding environment changes, the reference voltage 242 stays within a narrow voltage range, that is a voltage range that is within +/- 7% of the nominal voltage for the reference voltage 242, and more preferably, +/- 3% of the nominal voltage for the reference voltage 242.

The reference voltage 242 is supplied to a positive input of the integrated voltage regulator 244. The integrated voltage regulator 244 receives the reference voltage 242 and the negative high power supply voltage 246, and generates an output voltage 253. The integrated voltage regulator 244 increases the value of the output voltage 253 until the value of the reference voltage 242 entering the positive input and the value of the negative high power supply voltage 246 entering the negative input, are the essentially same. The output voltage 253 enters the pass transistor 258 at a base of the pass transistor 258. Positive high power supply voltage 254 enters the pass transistor 258, as illustrated in Figure 2. If the pass transistor 258 is a NPN-type transistor, then positive high power supply voltage 254 enters the pass transistor 258 at a collector of the pass transistor 258. If the pass transistor 258 is a PNP-type transistor, then positive high power supply voltage 254 enters the pass transistor 258 at an emitter of the pass transistor 258. An external signal 255 leaves the pass transistor 258 either at an emitter, if the pass transistor 258 is a NPN-type transistor, or at a collector, if the pass transistor 258 is a PNP-type transistor. A portion of the external signal 255 is transmitted through a resistive voltage divider 248 to the negative input of the integrated voltage divider 244, while another portion of the external signal 255 is supplied to the analog portion 162 and the clock synthesizer 154 as an internal positive low power supply voltage 256. The internal positive low power supply voltage 256 has a narrow voltage range. Preferably, the internal positive low power supply voltage 256 is less than 2.2 volts, and more preferably less than 2.0 volts. In one embodiment, the internal positive low power supply voltage 256 has a value of 1.92 volts +/- 3%. While the above described pass transistor 258 is either a PNP-transistor, or a NPN transistor, the pass transistor 258 may include any transistor known to those skilled in the art, such as an MOS transistor, a NMOS transistor, or a PMOS transistor.

By incorporating any one or all of the above-described components of the read/write channel 108 into the read/write channel 108, and in particular, into the analog portion 162 and the clock synthesizer 154, and by using the highly regulated power supply 260, as illustrated in Figure 2, it is possible to manufacture a read/write channel 108 including high voltage transistors and low voltage transistors, wherein the highly regulated power supply 260 supplies power having a single, low voltage range to the read/write channel 108. Operating the read/write channel 108 in a single, low voltage range would prevent the use of additional circuitry, would eliminate verification and simulations performed on the analog portion 162 and the clock synthesizer 154, and would lower the power consumption of the read/write channel 108. Moreover, the time required to design the read/write channel 108 would be decreased.

For example, by incorporating any one or all of the above-described components into the read/write channel 108, and in particular, into the analog portion 162 and the clock synthesizer 154, and by using the highly regulated power supply 260, it is possible to manufacture a read/write channel 108 including high voltage transistors that operate at a voltage range of between 1.86 volts and 1.98 volts (1.92 volts +/- 3%) and low voltage transistors that operate at a voltage range of between 1.62 volts and 1.98 volts (1.8 volts +/- 10%), wherein the highly regulated power supply 260 supplies power having a single, low voltage range of between 1.86 volts and 1.98 volts (1.92 volts +/- 3%) to the read/write channel 108.

In one preferred embodiment, the low voltage transistors have a maximum voltage rating. The maximum voltage rating is the maximum voltage at which the low voltage transistors may operate at. In this embodiment, the highly regulated power supply 260 supplies power to the analog portion 162 and the clock synthesizer 154 having a nominal value between 95% and 100% of the maximum voltage rating of the low voltage transistors. So, for example, if the low voltage transistors have a maximum voltage rating of 1.98 volts, then the highly regulated power supply 260 would supply power to the analog portion 162 and the clock synthesizer 154 which is between 1.88 volts and 1.98 volts.

It is to be noted that suitable transistor sizes specifying channel width-to-length ratios (measured in micrometers or microns) for the transistors which make up the depicted circuits have been omitted from the figures. It will be appreciated that suitable ratios may be chosen depending on the design requirements and the capabilities and limitations of the particular integrated circuit fabrication process used for implementation of the circuit as well as the performance requirements of the specific embodiment.

Thus, there has been disclosed in accordance with the invention, an efficient analog front end for a read/write channel of a hard disk drive running from a highly regulated power supply that fully provides the advantages set forth above. Although the invention has been described and illustrated with reference to specific illustrative embodiments thereof, it is not intended that the invention be limited to those illustrative embodiments. Those skilled in the art will recognize that variations and modifications can be made without departing from the scope of the invention.

## Claims

1. A read/write channel (108) for a hard disk drive (100) comprising:
an analog portion (162) for processing and analog to digital converting of signals sensed from platters (102) of the hard disk drive (100) ;
a clock synthesizer (154) for generating clock signals for the analog portion (162) and other components of the read/write channel (108),
wherein the analog portion (162) and the clock synthesizer (154) both comprise high-voltage transistors which are able to operate in a first voltage range around a nominal voltage of the high-voltage transistors and low-voltage transistors which are able to operate in a second voltage range around a nominal voltage of the low-voltage transistors, and wherein the nominal voltage of the high-voltage transistors is higher than the nominal voltage of the low-voltage transistors and the first voltage range is within the second voltage range; and
a regulated power supply (260) connected to the analog portion (162) and the clock synthesizer (154), wherein the regulated power supply is configured to supply the analog portion (162) and the clock synthesizer (154) with a voltage that is within a third voltage range around a nominal power supply voltage of the regulated power supply; and
wherein the third voltage range is within the first voltage range.

2. The read/write channel of claim 1, wherein the
read/write channel (108) is connected to preamplifiers (106), and wherein the analog portion (162) receives an analog signal from the preamplifiers (106) and converts the analog signal to a digital signal.

3. The read/write channel of claim 1, wherein the analog portion (162) further comprises an attenuation circuit/input
resistance (122), a variable gain amplifier (124), a magneto-resistive asymmetry linearizer (126), a continuous time filter (128), a buffer (130), and an analog to digital converter (132).

4. The read/write channel of claim 3, wherein the analog portion (162) further comprises a view DAC (212), a first view DAC feedback circuit (278) and a second view DAC feedback circuit (280), wherein the view DAC (212) generates a view DAC output signal which is input into either the
variable gain amplifier (124) or the continuous time filter (128).

5. The read/write channel of claim 1, wherein the clock synthesizer (154) further comprises a phased locked loop with a voltage controlled oscillator (250) and various clock dividers (230) to generate the necessary frequencies.

6. The read/write channel of claim 5, wherein the clock synthesizer (154) further comprises a servo clock generator (200), a read/write clock generator (204), a clock multiplexer (208), and an auxiliary clock multiplexer and divider (230).

7. The read/write channel of claim 6, wherein the
read/write clock generator (204) uses no divider at reference frequency inputs of the phase locked loops for generating a read clock signal.

8. The read/write channel of claim 6, wherein the servo
clock generator (200) uses no divider at reference frequency inputs of the phase locked loops for generating a servo clock signal.

9. The read/write channel of claim 1, wherein the analog portion (162) further comprises a write pre-compensation circuit (150) connected with the clock synthesizer (154),
wherein the write pre-compensation circuit (150) dynamically adjusts the pulse widths of a bit stream to account for magnetic distortions.

10. The read/write channel of claim 9, wherein the
read/write clock generator (204) further comprises a Voltage Controlled Oscillator (250) that is used for read/write clock generation, and wherein the read/write clock generator (204) generates a multiphase output signal using the Voltage Controlled Oscillator (250).

11. The read/write channel of claim 10, wherein the multiphase output signal includes at least four signals of varying phase.

12. The read/write channel of claim 1, wherein the analog portion (162) further comprises a 7 bit digital multiplexer (228), a view DAC (212), an analog multiplexer (216), high speed analog pin driver buffers (218), an analog comparator (220), and a successive approximation register (222).

13. The read/write channel of claim 12, wherein the analog portion (162) further comprises a second analog multiplexer (274), write output drivers (272), and a DC test bus enable switch (276).

14. The read/write channel of claim 1, wherein the first voltage range is between 1.86 volts and 1.98 volts and the second voltage range is between 1.62 volts and 1.98 volts.

15. The read/write channel of claim 14, wherein the regulated power supply (260) supplies a voltage that is between 1.86 volts and 1.98 volts, and wherein the analog portion (162) and the clock synthesizer (154) are manufactured using a 0.18 micron CMOS process.

16. The read/write channel of claim 14, wherein the regulated power supply (260) supplies a voltage that is between 1.5 volts and 1.6 volts, and wherein the analog portion (162) and the clock synthesizer (154) are manufactured using a 0.13 micron CMOS process.

17. The read/write channel of claim 14, wherein the regulated power supply (260) supplies a voltage that is between 1.13 volts and 1.2 volts, and wherein the analog portion (162) and the clock synthesizer (154) are manufactured using a 0.10 micron CMOS process.

18. The read/write channel of claim 1, wherein the regulated power supply (260) supplies a voltage having a narrow voltage range that does not vary more than +/-4% from the nominal power supply voltage.

19. The read/write channel of claim 1, wherein the second transistors have a maximum voltage rating, and wherein regulated power supply (260) supplies a voltage having a nominal value between 95% and 100% of the maximum voltage rating of the second transistors.

20. The read/write channel of claim 1, wherein the regulated power supply (260) comprises a chopper stabilized bandgap (240), an integrated voltage regulator (244), a negative power supply voltage (246), a resistive voltage divider (248), a pass transistor (258), and an external power supply (238).

21. The read/write channel of claim 1, wherein the pass transistor (258) is not located within the analog portion (162) of the read/write channel.

22. A method for operating a read/write channel (108) for a hard disk drive (100), the method comprising:
providing an analog portion (162) of the read/write channel (108), for processing and analog to digital converting of signals sensed from platters (102) of the hard disk drive (100) ;
providing a clock synthesizer (154) of the read/write channel (108), for generating clock signals for the analog portion (162) and other components of the read/write channel (108);
wherein the analog portion (162) and the clock synthesizer (154) both comprise high-voltage transistors which are able to operate in a first voltage range around a nominal voltage of the high-voltage transistors and low-voltage transistors which are able to operate in a second voltage range around a nominal voltage of the low-voltage transistors, and wherein the nominal voltage of the high-voltage transistors is higher than the nominal voltage of the low-voltage transistors and the first voltage range is within the second voltage range;
supplying, by a regulated power supply connected to the analog portion (162) and the clock synthesizer (154), the analog portion (162) and the clock synthesizer (154) with a voltage that is within a third voltage range around a nominal power supply voltage of the regulated power supply (260), wherein the third voltage range is within the first voltage range.

23. The method of claim 22, wherein the voltage supplied by the regulated power supply (260) does not vary more than +/-7% from the nominal power supply voltage.

24. The method of claim 22, wherein the regulated power supply (260) comprises a chopper stabilized bandgap (240), an integrated voltage regulator (244), a negative power supply voltage (246), a resistive voltage divider (248), a pass transistor (258), and an external power supply (238).

## Patentansprüche

1. Lese-/Schreibkanal (108) für einen Festplattenspeicher (100), umfassend:
einen analogen Teil (162) zur Verarbeitung und Analog-Digital-Umsetzung von Signalen, die von Magnetspeicherplatten (102) des Festplattenspeichers (100) gelesen werden;
einen Clock-Synthesizer (154) zur Erzeugung von Taktsignalen für den analogen Teil (162) und andere Komponenten des Lese-/Schreibkanals (108),
wobei sowohl der analoge Teil (162) als auch der Clock-Synthesizer (154) Hochspannungstransistoren enthalten, die in einem ersten Spannungsbereich um eine Nennspannung der Hochspannungstransistoren arbeiten können, und Niederspannungstransistoren, die in einem zweiten Spannungsbereich um eine Nennspannung der Niederspannungstransistoren arbeiten können, und wobei die Nennspannung der Hochspannungstransistoren höher ist als die Nennspannung der Niederspannungstransistoren, und der erste Spannungsbereich sich innerhalb des zweiten Spannungsbereiches befindet; und
eine Konstantstromversorgung (260), die mit dem analogen Teil (162) und dem Clock-Synthesizer (154) verbunden ist, wobei die Konstantstromversorgung ausgelegt ist, den analogen Teil (162) und den Clock-Synthesizer (154) mit einer Spannung zu versorgen, die innerhalb eines dritten Spannungsbereichs um eine Stromversorgungsnennspannung der Konstantstromversorgung herum liegt; und
wobei der dritte Spannungsbereich innerhalb des ersten Spannungsbereiches liegt.

2. Lese-/Schreibkanal nach Anspruch 1, wobei der
Lese-/Schreibkanal (108) mit Vorverstärkern (106) verbunden ist und wobei der analoge Teil (162) ein analoges Signal von den Vorverstärkern (106) empfängt und das analoge Signal in ein digitales Signal umsetzt.

3. Lese-/Schreibkanal nach Anspruch 1, wobei der analoge Teil (162) des Weiteren einen Dämpfungskreis/Eingangswiderstand (122), einen Verstärker mit variabler Verstärkung (124), einen magnetoresistiven Asymmetrielinearisierer (126), ein zeitkontinuierliches Filter (128), einen Pufferspeicher (130) und einen Analog-Digital-Umsetzer (132) aufweist.

4. Lese-/Schreibkanal nach Anspruch 3, wobei der analoge Teil (162) des Weiteren einen Betrachtungs-DAC (212), eine erste Rückkopplungsschaltung (278) des Betrachtungs-DAC und eine zweite Rückkopplungsschaltung (280) des Betrachtungs-DAC umfasst, wobei der Betrachtungs-DAC (212) ein Betrachtungs-DAC-Ausgangssignal erzeugt, das entweder in den
Verstärker mit variabler Verstärkung (124) oder in das zeitkontinuierliche Filter (128) eingegeben wird.

5. Lese-/Schreibkanal nach Anspruch 1, wobei der Clock-Synthesizer (154) des Weiteren einen Phasenregelkreis mit einem spannungsgeregelten Oszillator (250) und verschiedene Taktteiler (230) zum Erzeugen der notwendigen Frequenzen umfasst.

6. Lese-/Schreibkanal nach Anspruch 5, wobei der Clock-Synthesizer (154) des Weiteren einen Servotaktgeber (200), einen Lese-/Schreibtaktgeber (204), einen Taktmultiplexer (208) und einen zusätzlichen Taktmultiplexer und Teiler (230) umfasst.

7. Lese-/Schreibkanal nach Anspruch 6, wobei der
Lese-/Schreibtaktgeber (204) zur Erzeugung eines Lesetaktsignals keinen Teiler bei Bezugsfrequenzeingaben der Phasenregelkreise verwendet.

8. Lese-/Schreibkanal nach Anspruch 6, wobei
der Servotaktgeber (200) zur Erzeugung eines Servotaktsignals keinen Teiler bei Bezugsfrequenzeingaben der Phasenregelkreise verwendet.

9. Lese-/Schreibkanal nach Anspruch 1, wobei der analoge Teil (162) des Weiteren eine Schreib-Vorkompensationsschaltung (150) umfasst, die mit dem Clock-Synthesizer (154) verbunden ist,
wobei die Schreib-Vorkompensationsschaltung (150) die Impulsbreiten eines Bitstroms, die magnetische Verzerrungen erklären, dynamisch abgleicht.

10. Lese-/Schreibkanal nach Anspruch 9, wobei der
Lese-/Schreibtaktgeber (204) des Weiteren einen spannungsgeregelten Oszillator (250) aufweist, der zur Lese-/Schreibtakterzeugung verwendet wird, und wobei der Lese-/Schreibtaktgeber (204) ein mehrphasiges Ausgangssignal unter Verwendung des spannungsgeregelten Oszillators (250) erzeugt.

11. Lese-/Schreibkanal nach Anspruch 10, wobei das mehrphasige Ausgangssignal mindestens vier Signale veränderlicher Phase einschließt.

12. Lese-/Schreibkanal nach Anspruch 1, wobei der analoge Teil (162) des Weiteren einen digitalen 7-Bit-Multiplexer (228), einen Betrachtungs-DAC (212), einen analogen Multiplexer (216), analoge Hochgeschwindigkeitspufferspeicher mit Pinansteuerung (218), einen analogen Komparator (220) und ein Register mit sukzessiver Approximation (222) umfasst.

13. Lese-/Schreibkanal nach Anspruch 12, wobei der analoge Teil (162) des Weiteren einen zweiten analogen Multiplexer (274), Schreibausgabetreiber (272) und einen DC-Freigabeschalter mit Prüfbus (276) umfasst.

14. Lese-/Schreibkanal nach Anspruch 1, wobei der erste Spannungsbereich zwischen 1,86 Volt und 1,98 Volt und der zweite Spannungsbereich zwischen 1,62 Volt und 1,98 Volt liegt.

15. Lese-/Schreibkanal nach Anspruch 14, wobei die Konstantstromversorgung (260) eine Spannung liefert, die zwischen 1,86 Volt und 1,98 Volt liegt, und wobei der analoge Teil (162) und der Clock-Synthesizer (154) unter Verwendung eines 0,18 µm CMOS-Verfahrens hergestellt sind.

16. Lese-/Schreibkanal nach Anspruch 14, wobei die Konstantstromversorgung (260) eine Spannung liefert, die zwischen 1,5 Volt und 1,6 Volt liegt, und wobei der analoge Teil (162) und der Clock-Synthesizer (154) unter Verwendung eines 0,13 µm CMOS-Verfahrens hergestellt sind.

17. Lese-/Schreibkanal nach Anspruch 14, wobei die Konstantstromversorgung (260) eine Spannung liefert, die zwischen 1,13 Volt und 1,2 Volt liegt, und wobei der analoge Teil (162) und der Clock-Synthesizer (154) unter Verwendung eines 0,10 µm CMOS-Verfahrens hergestellt sind.

18. Lese-/Schreibkanal nach Anspruch 1, wobei die Konstantstromversorgung (260) eine Spannung mit einem engen Spannungsbereich liefert, der nicht mehr als +/-4% von der Nennspannung der Stromversorgung abweicht.

19. Lese-/Schreibkanal nach Anspruch 1, wobei die zweiten Transistoren einen maximalen Spannungsnennwert besitzen, und wobei die Konstantstromversorgung (260) eine Spannung liefert, die einen Nennwert zwischen 95% und 100% des maximalen Spannungsnennwertes der zweiten Transistoren besitzt.

20. Lese-/Schreibkanal nach Anspruch 1, wobei die Konstantstromversorgung (260) einen zerhackerstabilisierten Bandabstand (240), einen integrierten Spannungsregler (244), eine Stromversorgung mit negativer Spannung (246) einen ohmschen Spannungsteiler (248), einen Durchgangstransistor (258) und eine externe Stromversorgung (238) umfasst.

21. Lese-/Schreibkanal nach Anspruch 1, wobei der Durchgangstransistor (258) nicht innerhalb des analogen Teils (162) des Lese-/Schreibkanals angeordnet ist.

22. Verfahren zum Betreiben eines Lese-/Schreibkanals (108) für einen Festplattenspeicher (100), wobei das Verfahren umfasst:
Bereitstellen eines analogen Teils (162) des Lese-/Schreibkanals (108) zur Verarbeitung und Analog-Digital-Umsetzung von Signalen, die von Magnetspeicherplatten (102) des Festplattenspeichers (100) gelesen werden;
Bereitstellen eines Clock-Synthesizers (154) des Lese-/Schreibkanals (108) zur Erzeugung von Taktsignalen für den analogen Teil (162) und andere Komponenten des Lese-/Schreibkanals (108);
wobei sowohl der analoge Teil (162) als auch der Clock-Synthesizer (154) Hochspannungstransistoren enthalten, die in einem ersten Spannungsbereich um eine Nennspannung der Hochspannungstransistoren herum arbeiten können, und Niederspannungstransistoren, die in einem zweiten Spannungsbereich um einen Nennspannung der Niederspannungstransistoren herum arbeiten können, und wobei die Nennspannung der Hochspannungstransistoren höher ist als die Nennspannung der Niederspannungstransistoren, und der erste Spannungsbereich innerhalb des zweiten Spannungsbereiches liegt;
Versorgen des analogen Teils (162) und des Clock-Synthesizers (154) durch eine mit dem analogen Teil (162) und dem Clock-Synthesizer (154) verbundene Konstantstromversorgung mit einer Spannung, die innerhalb eines dritten Spannungsbereiches um eine Nennspannung der Stromversorgung der Konstantstromversorgung (260) herum liegt, wobei der dritte Spannungsbereich innerhalb des ersten Spannungsbereiches liegt.

23. Verfahren nach Anspruch 22, wobei die durch die Konstantstromversorgung (260) zugeführte Spannung nicht mehr als +/-7% von der Nennspannung der Stromversorgung abweicht.

24. Verfahren nach Anspruch 22, wobei die Konstantstromversorgung (260) einen zerhackerstabilisierten Bandabstand (240), einen integrierten Spannungsregler (244), eine Stromversorgung mit negativer Spannung (246), einen ohmschen Spannungsteiler (248), einen Durchgangstransistor (258) und eine externe Stromversorgung (238) umfasst.

## Revendications

1. Canal de lecture/écriture (108) pour disque dur (100) comprenant .
une portion analogique (162) pour traiter et convertir d'analogique en numérique des signaux détectés sur des plateaux (102) du disque dur (100) ;
un synthétiseur d'horloge (154) pour générer des signaux d'horloge pour la portion analogique (162) et d'autres composants du canal de lecture/écriture (108),
dans lequel la portion analogique (162) et le synthétiseur d'horloge (154) comprennent tous deux des transistors haute tension capables de fonctionner dans une première plage de tension autour d'une tension nominale des transistors haute tension et des transistors basse tension capables de fonctionner dans une deuxième plage de tension autour d'une tension nominale des transistors basse tension, et dans lequel la tension nominale des transistors haute tension est supérieure à la tension nominale des transistors basse tension et la première plage de tension est comprise dans la deuxième plage de tension ; et
une alimentation régulée (260) connectée à la portion analogique (162) et au synthétiseur d'horloge (154), dans lequel l'alimentation régulée est configurée pour alimenter la portion analogique (162) et le synthétiseur d'horloge (154) avec une tension comprise dans une troisième plage de tension autour d'une tension d'alimentation nominale de l'alimentation régulée ; et
dans lequel la troisième plage de tension est comprise dans la première plage de tension.

2. Canal de lecture/écriture selon la revendication 1, dans lequel le canal de lecture/écriture (108) est connecté à des préamplificateurs (106), et dans lequel la portion analogique (162) reçoit un signal analogique provenant des préamplificateurs (106) et convertit le signal analogique en signal numérique.

3. Canal de lecture/écriture selon la revendication 1, dans lequel la portion analogique (162) comprend en outre un élément circuit d'atténuation / résistance d'entrée (122), un amplificateur à gain variable (124), un linéarisateur d'asymétrie magnétorésistant (126), un filtre en temps continu (128), une mémoire tampon (130), et un convertisseur analogique-numérique (132).

4. Canal de lecture/écriture selon la revendication 3, dans lequel la portion analogique (162) comprend en outre un convertisseur numérique-analogique CNA de visualisation (212), un premier circuit de rétroaction CNA de visualisation (278) et un deuxième circuit de rétroaction de CNA de visualisation (280), dans lequel le CNA de visualisation (212) génère un signal de sortie de CNA de visualisation qui est entré soit dans l'amplificateur à gain variable (124), soit dans le filtre en temps continu (128).

5. Canal de lecture/écriture selon la revendication 1, dans lequel le synthétiseur d'horloge (154) comprend en outre une boucle à verrouillage de phase avec un oscillateur commandé en tension (250) et plusieurs diviseurs d'horloge (230) pour générer les fréquences nécessaires.

6. Canal de lecture/écriture selon la revendication 5, dans lequel le synthétiseur d'horloge (154) comprend en outre un générateur d'horloge asservi (200), un générateur d'horloge de lecture/écriture (204), un multiplexeur d'horloge (208), et un diviseur et multiplexeur d'horloge auxiliaire (230).

7. Canal de lecture/écriture selon la revendication 6, dans lequel le générateur d'horloge de lecture/écriture (204) n'utilise aucun diviseur à des entrées de fréquence de référence des boucles à verrouillage de phase pour générer un signal d'horloge de lecture.

8. Canal de lecture/écriture selon la revendication 6, dans lequel le générateur d'horloge asservi (200) n'utilise aucun diviseur à des entrées de fréquence de référence des boucles à verrouillage de phase pour générer un signal d'horloge asservi.

9. Canal de lecture/écriture selon la revendication 1, dans lequel la portion analogique (162) comprend en outre un circuit de précompensation d'écriture (150) connecté au synthétiseur d'horloge (154),
dans lequel le circuit de précompensation d'écriture (150) ajuste dynamiquement les largeurs d'impulsion d'un flux binaire pour prendre en compte les distorsions magnétiques.

10. Canal de lecture/écriture selon la revendication 9, dans lequel le générateur d'horloge de lecture/écriture (204) comprend en outre un oscillateur commandé en tension (250) qui est utilisé pour une génération d'horloge de lecture/écriture, et dans lequel le générateur d'horloge de lecture/écriture (204) génère un signal de sortie multiphase en utilisant l'oscillateur commandé en tension (250).

11. Canal de lecture/écriture selon la revendication 10, dans lequel le signal de sortie multiphase inclut au moins quatre signaux à phase variable.

12. Canal de lecture/écriture selon la revendication 1, dans lequel la portion analogique (162) comprend en outre un multiplexeur numérique à 7 bits (228), un CNA de visualisation (212), un multiplexeur analogique (216), des mémoires tampon de pilote à broches analogiques à haute vitesse (218), un comparateur analogique (220), et un registre d'approximation successive (222).

13. Canal de lecture/écriture selon la revendication 12, dans lequel la portion analogique (162) comprend en outre un deuxième multiplexeur analogique (274), des pilotes de sortie d'écriture (272), et un commutateur d'habilitation de bus d'essai à courant continu CC (276).

14. Canal de lecture/écriture selon la revendication 1, dans lequel la première plage de tension est comprise entre 1,86 volts et 1,98 volts et la deuxième plage de tension est comprise entre 1,62 volts et 1,98 volts.

15. Canal de lecture/écriture selon la revendication 14, dans lequel l'alimentation régulée (260) fournit une tension comprise entre 1,86 volts et 1,98 volts, et dans lequel la portion analogique (162) et le synthétiseur d'horloge (154) sont fabriqués en utilisant un processus CMOS de 0,18 micron.

16. Canal de lecture/écriture selon la revendication 14, dans lequel l'alimentation régulée (260) fournit une tension comprise entre 1,5 volts et 1,6 volts, et dans lequel la portion analogique (162) et le synthétiseur d'horloge (154) sont fabriqués en utilisant un processus CMOS de 0,13 micron.

17. Canal de lecture/écriture selon la revendication 14, dans lequel l'alimentation régulée (260) fournit une tension comprise entre 1,13 volts et 1,2 volts, et dans lequel la portion analogique (162) et le synthétiseur d'horloge (154) sont fabriqués en utilisant un processus CMOS de 0,10 micron.

18. Canal de lecture/écriture selon la revendication 1, dans lequel l'alimentation régulée (260) fournit une tension ayant une plage de tension étroite qui ne varie de pas plus de ±4% par rapport à la tension d'alimentation nominale.

19. Canal de lecture/écriture selon la revendication 1, dans lequel les deuxièmes transistors ont une tension maximale nominale, et dans lequel l'alimentation régulée (260) fournit une tension ayant une valeur nominale comprise entre 95 % et 100 % de la tension maximale nominale des deuxièmes transistors.

20. Canal de lecture/écriture selon la revendication 1, dans lequel l'alimentation régulée (260) comprend un intervalle de bande stabilisé par un hacheur (240), un régulateur de tension intégré (244), une tension d'alimentation négative (246), un diviseur de tension résistif (248), un transistor ballast (258), et une alimentation externe (238).

21. Canal de lecture/écriture selon la revendication 1, dans lequel le transistor ballast (258) ne se trouve pas dans la portion analogique (162) du canal de lecture/écriture.

22. Procédé de fonctionnement d'un canal de lecture/écriture (108) pour un disque dur (100), le procédé comprenant :
la fourniture d'une portion analogique (162) du canal de lecture/écriture (108) pour traiter et convertir d'analogique en numérique des signaux détectés sur des plateaux (102) du disque dur (100) ;
la fourniture d'un synthétiseur d'horloge (154) du canal de lecture/écriture (108) pour générer des signaux d'horloge pour la portion analogique (162) et d'autres composants du canal de lecture/écriture (108) ;
dans lequel la portion analogique (162) et le synthétiseur d'horloge (154) comprennent tous deux des transistors haute tension capables de fonctionner dans une première plage de tension autour d'une tension nominale des transistors haute tension et des transistors basse tension capables de fonctionner dans une deuxième plage de tension autour d'une tension nominale des transistors basse tension, et dans lequel la tension nominale des transistors haute tension est supérieure à la tension nominale des transistors basse tension, et la première plage de tension est comprise dans la deuxième plage de tension ;
l'alimentation, par une alimentation régulée connectée à la portion analogique (162) et au synthétiseur d'horloge (154), de la portion analogique (162) et du synthétiseur d'horloge (154) avec une tension comprise dans une troisième plage de tension autour d'une tension d'alimentation nominale de l'alimentation régulée (260), dans lequel la troisième plage de tension est comprise dans la première plage de tension.

23. Procédé selon la revendication 22, dans lequel la tension fournie par l'alimentation régulée (260) ne varie de pas plus de ±7% par rapport à la tension d'alimentation nominale.

24. Procédé selon la revendication 22, dans lequel l'alimentation régulée (260) comprend un intervalle de bande stabilisé par un hacheur (240), un régulateur de tension intégré (244), une tension d'alimentation négative (246), un diviseur de tension résistif (248), un transistor ballast (258), et une alimentation externe (238).
